# EUROPÄISCHE PATENTSCHRIFT

(11) **EP 3 620 224 B1**
(45) Veröffentlichungstag und Bekanntmachung des Hinweises auf die Patenterteilung: **16.06.2021**
(21) Anmeldenummer: 18020437.2
(22) Anmeldetag: 07.09.2018
(51) Int. Cl.: B01D 53/14

(54) **VERFAHREN ZUR ENTFERNUNG VON SAUREN GASBESTANDTEILEN AUS SYNTHESEGAS UND VORRICHTUNG ZUR ERZEUGUNG VON RECYCLE-GAS**
METHOD FOR THE REMOVAL OF ACIDIC GAS COMPONENTS FROM SYNTHESIS GAS AND DEVICE FOR GENERATING RECYCLE GAS
PROCÉDÉ D'ÉLIMINATION DES COMPOSANTS GAZEUX ACIDES DU GAZ DE SYNTHÈSE ET DISPOSITIF DE PRODUCTION DE GAZ DE RECYCLAGE

(43) Veröffentlichungstag der Anmeldung: 11.03.2020
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Guan, Micro, Shanghai 200232 (CN); Gubrinski, Alfred, 64390 Erzhausen (DE); Rappold, Dorit, 60437 Frankfurt am Main (DE); Schmidt, Sophia, 60486 Frankfurt am Main (DE)
(74) Vertreter: Stang, Stefan

(56) Entgegenhaltungen:
- EP-A1- 2 551 008
- DE-A1-102009 015 368
- US-A- 4 568 364
- US-A1- 2015 165 366

## Beschreibung

### Gebiet der Erfindung

Die Erfindung betrifft ein Verfahren zur Entfernung von sauren Gasbestandteilen aus Synthesegas durch Absorption der sauren Gasbestandteile in einem physikalisch wirkenden Waschmittel. Die Erfindung betrifft ferner eine Vorrichtung zur Erzeugung eines Recycle-Gases aus einem mit wenigstens Kohlendioxid (CO₂) beladenen Waschmittel und eine Anlage zur Entfernung von sauren Gasbestandteilen aus Synthesegas durch Absorption der sauren Gasbestandteile in einem physikalisch wirkendem Waschmittel, wobei die Anlage eine erfindungsgemäße Vorrichtung beinhaltet.

### Stand der Technik

Verfahren zur Abtrennung von unerwünschten Begleitstoffen aus technischen Syntheserohgasen mittels physikalischer oder chemischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Syntheserohgasen, beispielsweise Kohlendioxid (CO₂) und Schwefelwasserstoff (H₂S), aber auch Carbonylsulfid (COS) und Cyanwasserstoff (HCN), von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und chemisch oder physikalisch gebunden in Lösung zu halten. Wie gut ein Gas von einer Flüssigkeit absorbiert wird, wird durch den Absorptionskoeffizienten - auch als Löslichkeitskoeffizient bezeichnet - ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Waschmittel bezeichnet.

Bei der Gaswäsche aus dem Syntheserohgas ausgewaschene Komponenten werden im Anschluss an die Gaswäsche aus dem beladenen Waschmittel entfernt, wodurch ein regeneriertes oder zumindest teilregeneriertes Waschmittel erhalten wird. Bekannte Verfahren zur Regenerierung des Waschmittels sind Druckentspannung mit oder ohne Stripp-Gas sowie Heißregenerierung, bei der der Eigendampf des Waschmittels als Stripp-Gas verwendet wird.

Ein bekanntes und häufig angewendetes Gaswäscheverfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Bestandteile des Syntheserohgases durch kaltes, das heißt signifikant unter Umgebungstemperatur abgekühltes Methanol als Absorbens oder Waschmittel, wobei in einer Absorptionsvorrichtung, auch als Absorber oder Waschkolonne bezeichnet, ein intensiver Stoffaustausch zwischen dem Syntheserohgas und dem Waschmittel erfolgt. Dabei erhöht sich die Löslichkeit der unerwünschten Gasbestandteile wie oben erwähnt mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität aufzuweisen, womit es auch bei sehr niedrigen Temperaturen großtechnisch verwendbar ist.

Gaswäsche-Anlagen wie beispielsweise Rectisol-Anlagen werden häufig dafür verwendet, zwei oder mehr Syntheserohgasströme durch Gaswäsche zu reinigen. Dies hat den Vorteil, dass mehrere Produkte für die nachgelagerte Verarbeitung (downstream processing) erzeugt werden können. Ein Beispiel ist die gleichzeitige Herstellung von gereinigtem geshiftetem und nicht geshiftetem Synthesegas zur Herstellung von Methanol, Monoethylenglycol und Wasserstoff. Bei diesem Prozess werden ein Syntheserohgas aus einer Vergasungsanlage (Kohlevergasung) und ein geshiftetes Syntheserohgas aus einer Synthesegas-Shift-Anlage in dedizierten Absorptionsvorrichtungen mit kaltem Methanol bei hohen Drücken gereinigt. Die Teilmengen des geshifteten und nicht geshifteten Synthesegases können auch in vordefinierten Verhältnissen gemischt werden, um eine optimale Stöchiometrie zur Erzeugung eines bestimmten Produktes in einer nachgelagerten Synthese, zum Beispiel von Methanol, einzustellen.

Unter "geshiftetem Syntheserohgas" wird dabei ein Syntheserohgas verstanden, das einer Wassergas-Shift-Reaktion unterzogen wurde. Bei dieser Reaktion wird der Kohlenmonoxid-Anteil im Syntheserohgas verringert und gleichzeitig der Wasserstoff-Anteil erhöht, indem das Kohlenmonoxid mit Wasserdampf katalytisch zu Kohlendioxid und Wasserstoff umgesetzt wird. Dabei fällt Kohlendioxid als Nebenprodukt an. Geshiftete Syntheserohgase können auch als konvertierte Syntheserohgase bezeichnet werden.

Die Absorptionsvorrichtungen für das konvertierte und nicht konvertierte Syntheserohgas weisen jeweils dedizierte Bereiche zur Entfernung von sauren Gasbestandteilen und weiteren Verunreinigungen auf. Aufgrund der Selektivität des jeweiligen Waschmittels für bestimmte Gasbestandteile werden diese mehr oder weniger leicht absorbiert. Im Beispiel des Methanols werden Spurenbestandteile wie Cyanwasserstoff (HCN) am leichtesten absorbiert, gefolgt von den Schwefelverbindungen Schwefelwasserstoff (H₂S) und Carbonylsulfid (COS), und schließlich gefolgt von Kohlendioxid (CO₂), das im Vergleich zu den vorgenannten Gasen in Bezug auf Methanol den niedrigsten Absorptionskoeffizienten aufweist. Aufgrund dieser Selektivität werden im Beispiel des Gaswäscheverfahrens mit Methanol als Waschmittel in den dedizierten Bereichen der Absorptionsvorrichtungen üblicherweise ein mit hauptsächlich Kohlendioxid beladenes Waschmittel erzeugt, ein mit Schwefelwasserstoff und Kohlendioxid beladenes Waschmittel erzeugt ("Entschwefelung"), sowie ein mit Spurenbestandteilen beladenes Waschmittel erzeugt.

In Bezug auf Methanol noch niedrigere Absorptionskoeffizienten als Kohlendioxid weisen die Wertgase Wasserstoff (H₂) und Kohlenmonoxid (CO) auf. Trotzdem werden diese Wertgase im Waschmittel in kleineren Mengen co-absorbiert. Im Beispiel der Methanol-Wäsche werden die Wertgase dabei hauptsächlich im Schwefelwasserstoff und Kohlendioxid enthaltendem Waschmittel gefunden.

Zur Rückgewinnung von im Waschmittel co-absorbierter Wertgase wird das beladene Lösungsmittel üblicherweise bei mittlerem Druck einer Entspannungsregenerierung (Flashen) unterzogen und die dabei desorbierten Wertgase als Recycle-Gas zur Absorptionsvorrichtung zurückgeführt. Bei diesem Vorgang wird auch Kohlendioxid aus dem Waschmittel desorbiert und stellt häufig die Hauptkomponente im Recycle-Gas dar. Da Kohlendioxid im Allgemeinen kein Wertgas darstellt, stellt es eine unerwünschte Komponente im Recycle-Gas dar.

In aus dem Stand der Technik bekannten Verfahren wie dem der WO 2014/023419 A1 oder der DE 10 2015 005 203 A1 werden die Wertgase aufweisenden beladenen Waschmittelströme aus der für das geshiftete Syntheserohgas verwendeten Absorptionsvorrichtung und der für das nicht geshiftete Syntheserohgas verwendeten Absorptionsvorrichtung zusammengeführt und anschließend der Entspannungsregenerierung zur Erzeugung des Recycle-Gases zugeführt. Das Recycle-Gas wird anschließend in einem Kompressor verdichtet und zu einer der Absorptionsvorrichtungen zurückgeführt.

Weitere Verfahren zur Synthesegas-Absorption sind im Stand der Technik aus DE 10 2009 015368, EP 2551008, US 2015 165366 und US 4568364 bekannt.

Je höher bei einem solchen Verfahren der Kohlendioxid-Gehalt im Recycle-Gas ist, desto höher werden die Kosten für den Anlagenbetreiber. Darunter fallen höhere Investitionskosten für einen größeren Recycle-Gas Kompressor und/oder größere Absorptionsvorrichtungen. Ferner fallen erhöhte Betriebskosten aufgrund für den Kompressor benötigter größerer Elektrizitätsmengen und einen erhöhten Waschmittelbedarf an.

### Beschreibung der Erfindung

Die Aufgabe der vorliegenden Erfindung besteht also darin, die vorgenannten Nachteile des Standes der Technik zumindest teilweise zu überwinden.

Insbesondere besteht eine Aufgabe der vorliegenden Erfindung darin, ein Verfahren anzugeben, durch welches der Kohlendioxid-Anteil im Recycle-Gas verringert werden kann.

Eine weitere Aufgabe der vorliegenden Erfindung liegt darin, ein Verfahren anzugeben, bei dem die Ausbeute an Wertgasen wie Kohlenmonoxid und Wasserstoff im Recycle-Gas erhöht werden kann.

Eine weitere Aufgabe besteht darin, eine Vorrichtung oder eine Anlage anzugeben, die wenigstens eine der vorgenannten Aufgaben zumindest teilweise löst.

Die Aufgaben der Erfindung werden zumindest teilweise gelöst durch ein Verfahren zur Entfernung von sauren Gasbestandteilen aus Synthesegas durch Absorption der sauren Gasbestandteile in einem physikalisch wirkenden Waschmittel, bei dem einem Entspannungsbehälter aus einer ersten Absorptionsvorrichtung ein erstes mit zumindest Kohlendioxid (CO₂) beladenes Waschmittel über eine erste Zuleitung zur Druckentspannung zugeführt wird, und dem Entspannungsbehälter aus einer zweiten Absorptionsvorrichtung ein zweites mit zumindest Kohlendioxid (CO₂) beladenes Waschmittel über eine zweite Zuleitung zur Druckentspannung zugeführt wird, wobei die Kohlendioxid-Konzentration im ersten beladenen Waschmittel höher ist als die Kohlendioxid-Konzentration im zweiten beladenen Waschmittel. Erfindungsgemäß ist vorgesehen, dass im Entspannungsbehälter eine wenigstens teilweise Durchmischung des ersten und des zweiten beladenen Waschmittels erfolgt, wobei durch die Durchmischung und Druckentspannung ein teilregeneriertes Waschmittel erhalten wird, und die erste Zuleitung und die zweite Zuleitung so angeordnet sind, dass durch die Druckentspannung aus dem ersten beladenen Waschmittel desorbiertes Kohlendioxid wenigstens teilweise vom zweiten beladenen Waschmittel absorbiert wird.

Unter "Synthesegas" wird im Sinne der Erfindung ein Syntheserohgas verstanden, das heißt ein Synthesegas, welches (noch) über unerwünschte Bestandteile verfügt, von denen es durch Gaswäsche in einer Absorptionsvorrichtung zu befreien ist.

In der Erfindung weist das Synthesegas wenigstens die Bestandteile Wasserstoff (H₂), Kohlenmonoxid (CO), Kohlendioxid (CO₂) und Schwefelwasserstoff (H₂S) auf, wobei Wasserstoff (H₂) und Kohlenmonoxid (CO) nicht zu entfernende Wertgase darstellen und Kohlendioxid (CO₂) und Schwefelwasserstoff (H₂S) zu entfernende saure Gasbestandteile darstellen.

In einem Beispiel ist das Waschmittel zumindest mit Kohlendioxid (CO₂) sowie Schwefelwasserstoff (H₂S) beladen.

Unter "sauren Gasbestandteilen" werden insbesondere Gasbestandteile verstanden, die in wässriger Lösung sauer reagieren, insbesondere Kohlendioxid (CO₂), Schwefelwasserstoff (H₂S), Cyanwasserstoff (HCN), Carbonylsulfid (COS) sowie Mercaptane (Thiole).

Unter einem "physikalisch wirkendem Waschmittel" wird ein Waschmittel verstanden, bei dem die Löslichkeit des betreffenden Gases im Waschmittel durch physikalische Wechselwirkungen bewirkt wird.

Unter einem "Entspannungsbehälter" wird eine Vorrichtung verstanden, in der ein unter einem bestimmten Druck, insbesondere unter hohem Druck stehendes beladenes Waschmittel oder eine andere unter hohem Druck stehende Flüssigkeit einer Druckentspannung unterzogen wird. Mit anderen Worten, die unter hohem Druck stehende Flüssigkeit, insbesondere das beladene Waschmittel, erfährt im Entspannungsbehälter eine Drucksenkung. In einem Beispiel weist das beladene Waschmittel einen Druck von 20 bis 100 bar auf. In einem bevorzugten Beispiel für eine dieser Erfindung zugrundeliegende Druckentspannung wird der Druck im Entspannungsbehälter auf typischerweise 15 bis 40 bar abgesenkt, worunter der Fachmann eine Entspannung auf einen mittleren Druck versteht. Auch denkbar, wenn auch weniger bevorzugt im Sinne der vorliegenden Erfindung, ist eine Druckentspannung auf einen Druck von 20 bis 70 bar (Hochdruck) oder eine Druckentspannung auf einen Druck von 1,2 bis 15 bar (Niederdruck). Der Entspannungsbehälter kann alternativ auch als "Druckentspannungsbehälter" oder "Flash-Behälter" bezeichnet werden.

Dem Entspannungsbehälter wird erfindungsgemäß über eine erste Zuleitung ein erstes beladenes Waschmittel zugeführt und über eine zweite Zuleitung ein zweites beladenes Waschmittel zugeführt. Das erste beladene Waschmittel wird in einer ersten Absorptionsvorrichtung erzeugt und das zweite beladene Waschmittel wird in einer zweiten Absorptionsvorrichtung erzeugt. In einem Beispiel wird das erste und/oder das zweite beladene Waschmittel aus der ersten und/oder zweiten Absorptionsvorrichtung abgezogen und dem Entspannungsbehälter anschließend unmittelbar zugeführt. Es sind jedoch auch Ausführungsformen denkbar, in denen die Zuleitung zum Entspannungsbehälter nicht unmittelbar erfolgt, sondern weitere Vorrichtungen, beispielsweise eine Strippung mit einem inerten Stripp-Gas, vorgesehen sind.

Die erste Zuleitung und die zweite Zuleitung zum Entspannungsbehälter sind räumlich voneinander getrennt, so dass eine wenigstens teilweise Durchmischung des ersten und zweiten beladenen Waschmittels erst im Entspannungsbehälter erfolgen kann. Vorzugsweise sind die erste und zweite Zuleitung so angeordnet, dass vor der Zuführung zum Entspannungsbehälter keinerlei Durchmischung des ersten und zweiten beladenen Waschmittels erfolgt.

Die Kohlendioxid-Konzentration im ersten beladenen Waschmittel ist höher als die Kohlendioxid-Konzentration im zweiten beladenen Waschmittel. Dies gilt in Bezug auf die Konzentrationen in den beladenen Waschmitteln, bevor das erste und das zweite beladene Waschmittel dem Entspannungsbehälter zugeführt werden. Mit anderen Worten, die Kohlendioxid-Konzentration im ersten beladenen Waschmittel ist höher als im zweiten beladenen Waschmittel, bevor das erste und zweite Waschmittel einer Drucksenkung im Entspannungsbehälter unterzogen werden, bei der die Konzentration an Kohlendioxid im Waschmittel durch Desorption sinkt.

Unter der "Kohlendioxid-Konzentration" ist dabei die Konzentration an Kohlendioxid in mol-%, das heißt der molare Anteil in Bezug auf die gesamte Stoffmenge der Flüssigphase zu verstehen, wobei sich die Flüssigphase aus der Stoffmenge des Waschmittels und der Stoffmenge der gelösten Gase zusammensetzt. Anders ausgedrückt bezieht sich die Angabe der Konzentration auf die gesamte Stoffmenge des beladenen Waschmittels. Dies gilt gleichermaßen für Konzentrations-Angaben anderer absorbierter Gase.

Im Entspannungsbehälter werden im ersten und zweiten beladenen Waschmittel absorbierte Gase durch die Drucksenkung zumindest teilweise desorbiert oder freigesetzt. Dabei wird aus dem ersten beladenen Waschmittel eine bestimmte Menge an Kohlendioxid desorbiert, die aufgrund der Anordnung der ersten und zweiten Zuleitung wenigstens teilweise wieder vom zweiten in den Entspannungsbehälter eintretenden beladenen Waschmittel absorbiert werden kann.

Da das zweite beladene Waschmittel grundsätzlich eine niedrigere Kohlendioxid-Konzentration aufweist und durch die Drucksenkung im Entspannungsbehälter selbst an Kohlendioxid verarmt, ist es dazu in der Lage, eine bestimmte Menge Kohlendioxid aus dem ersten beladenen Waschmittel aufzunehmen oder zu absorbieren.

Durch die Anordnung der ersten und zweiten Zuleitung und die unterschiedlichen Kohlendioxid-Konzentrationen in den dem Entspannungsbehälter zugeführten Waschmittel-Teilströmen der Waschmittel bildet sich im Entspannungsbehälter ein Kohlendioxid-Konzentrations-Gradient aus, der es erlaubt eine bestimmte aus dem ersten Waschmittel freigesetzte Menge an Kohlendioxid im zweiten Waschmittel zu (re-)absorbieren. Dadurch verringert sich die insgesamt im Entspannungsbehälter anfallende Menge an gasförmigem Kohlendioxid, da ein Teil dieses Kohlendioxids im zweiten Waschmittel absorbiert wird, mit dem aus dem Entspannungsbehälter abgezogen wird.

Im Ergebnis verringert sich die Menge an aus dem Entspannungsbehälter auszuleitendem Kohlendioxid und dadurch die Menge an Recycle-Gas insgesamt im Vergleich zu einem Verfahren, bei dem die beladenen Waschmittel vor Zuführung zu einem Entspannungsbehälter gemischt werden und die resultierende Waschmittelmischung einer Druckentspannung zugeführt wird. Das erfindungsgemäße Verfahren führt somit in vorteilhafter Weise dazu, dass eine kleinere Menge an Recycle-Gas auf den in der Absorptionsvorrichtung herrschenden Druck zu verdichten ist.

Dadurch sinkt die Belastung für den Kompressor, was den Vorteil hat, dass entweder ein kleinerer Kompressor verwendet werden kann und/oder weniger elektrische Leistung für einen (vorhandenen) Kompressor erforderlich ist. Weiterhin sinkt die Belastung in den Absorptionsvorrichtungen aufgrund einer kleineren Menge an zu (re-)absorbierendem Recycle-Gas. Dies hat den Vorteil, dass entweder eine kleinere Absorptionsvorrichtung erforderlich ist und/oder eine kleinere Menge an einzusetzendem Waschmittel in der (vorhandenen) Absorptionsvorrichtung erforderlich ist.

Im Entspannungsbehälter erfolgt eine wenigstens teilweise Durchmischung des ersten und des zweiten beladenen Waschmittels. Das Maß der Durchmischung hängt dabei von den im Entspannungsbehältern vorherrschenden Strömungsverhältnissen ab. Durch die Durchmischung und Druckentspannung im Entspannungsbehälter wird aus den ursprünglich in den Entspannungsbehälter eintretenden Waschmittelströmen (erstes und zweites Waschmittel) ein teilregeneriertes Waschmittel erhalten. Unter "teilregeneriert" wird dabei verstanden, dass die im Waschmittel absorbierten Gase unter den Bedingungen der Druckentspannung nicht vollständig aus dem Waschmittel entfernt, also desorbiert, werden.

Die Ausführungsform des erfindungsgemäßen Verfahrens ist dadurch gekennzeichnet, dass der ersten Absorptionsvorrichtung ein erster Synthesegasstrom zugeführt wird, und der zweiten Absorptionsvorrichtung ein zweiter Synthesegasstrom zugeführt wird, wobei der Kohlendioxid-Gehalt im ersten Synthesegasstroms höher ist als der Kohlendioxid-Gehalt im zweiten Synthesegasstroms.

Der ersten und zweiten Absorptionsvorrichtung werden unterschiedlich zusammengesetzte Synthesegasströme zugeführt, wobei der Kohlendioxid-Gehalt im ersten Synthesegasstrom höher ist als der Kohlendioxid-Gehalt im zweiten Synthesegasstrom. Der erhöhte Kohlendioxid-Gehalt im ersten Synthesegas-Strom wird in einem Beispiel durch eine Wassergas-Shift-Reaktion erzeugt, bei der Kohlenmonoxid mit Wasser katalytisch zu Kohlendioxid und Wasserstoff gemäß folgender Reaktionsgleichung umgesetzt wird:

CO + H₂O ⇄ CO₂ + H₂

Das Ziel der Wassergas-Shift-Reaktion ist die Verringerung des Kohlenmonoxid-Anteils im Synthesegas zur Erzeugung von Wasserstoff.

Unter Kohlendioxid-Gehalt wird in diesem Zusammenhang der Gehalt an Kohlendioxid im Synthesegas in mol-% bezogen auf die jeweilige Gesamtzusammensetzung des gasförmigen Gemischs verstanden. Die Angabe "Gehalt" gilt dabei gleichermaßen für andere Bestandteile des Synthesegases.

Der höhere Kohlendioxid-Gehalt im ersten Synthesegasstrom im Vergleich zum zweiten Synthesegasstrom führt nach Absorption in der ersten beziehungsweise zweiten Absorptionsvorrichtung zu einer entsprechend höheren Kohlendioxid-Konzentration im ersten beladenen Waschmittel im Vergleich zum zweiten beladenen Waschmittel.

Eine bevorzugte Ausführungsform des erfindungsgemäßen Verfahrens ist dadurch gekennzeichnet, dass der erste Synthesegasstrom einer Wassergas-Shift-Reaktion unterzogen wurde und der zweite Synthesegasstrom keiner Wassergas-Shift-Reaktion unterzogen wurde.

In dieser Variante des erfindungsgemäßen Verfahrens beinhaltet der erste Synthesegasstrom ein Synthesegas, in dem das Kohlenmonoxid vollständig oder im Wesentlichen vollständig mit Wasser zu Kohlendioxid und Wasserstoff konvertiert wurde. Im Wesentlichen vollständig bedeutet dabei, dass mindestens 95 mol-% des im Synthesegas vorhandenen Kohlenmonoxids bezogen auf die ursprünglich vorhandene Stoffmenge konvertiert wurden, oder 99 mol-%, oder 99,5 mol-%.

Der Ausdruck "keiner Wassergas-Shift-Reaktion unterzogen" bedeutet in diesem Zusammenhang, dass das betreffende Synthesegas nicht konvertiert wurde, also unverändert zum Einsatz kommt.

In einem weiteren Beispiel ist das erfindungsgemäße Verfahren dadurch gekennzeichnet, dass der erste Synthesegasstrom teilweise einer Wassergas-Shift-Reaktion unterzogen wurde und der zweite Synthesegasstrom keiner Wassergas-Shift Reaktion unterzogen wurde.

Wurde der erste Synthesegasstrom teilweise einer Wassergas-Shift-Reaktion unterzogen, so bedeutet dies, dass entweder eine definierte Mischung aus vollständig konvertiertem und nicht konvertiertem Synthesegas vorliegt, oder dass eine bestimmte Menge Synthesegas nur teilweise mit Wasser konvertiert wurde. In einem Beispiel für teilweise konvertiertes Kohlenmonoxid wurden mindestens 5 mol-% Kohlenmonoxid bezogen auf die ursprünglich vorhandene Stoffmenge konvertiert, oder mindestens 25 mol-%, oder 50 mol-%, oder 75 mol-%, oder 90 mol-%, jedoch weniger als 95 mol-%.

In einem weiteren Beispiel ist das erfindungsgemäße Verfahren dadurch gekennzeichnet, dass der erste Synthesegasstrom einer Wassergas-Shift-Reaktion unterzogen wurde und der zweite Synthesegasstrom teilweise einer Wassergas-Shift-Reaktion unterzogen wurde.

In dieser Variante des erfindungsgemäßen Verfahrens beinhaltet der erste Synthesegasstrom ein Synthesegas, in dem das Kohlenmonoxid vollständig oder im Wesentlichen vollständig mit Wasser zu Kohlenmonoxid und Wasserstoff konvertiert wurde. Im Wesentlichen vollständig bedeutet dabei, dass mindestens 95 mol-% des im Synthesegas vorhandenen Kohlenmonoxids bezogen auf die ursprünglich vorhandene Stoffmenge konvertiert wurden, oder 99 mol-%, oder 99,5 mol-%. Wurde der zweite Synthesegasstrom teilweise einer Wassergas-Shift-Reaktion unterzogen, so bedeutet dies, dass entweder eine definierte Mischung aus vollständig konvertiertem und nicht konvertiertem Synthesegas vorliegt, oder dass eine bestimmte Menge Synthesegas nur teilweise mit Wasser konvertiert wurde. In einem Beispiel für teilweise konvertiertes Kohlenmonoxid wurden mindestens 5 mol-% Kohlenmonoxid bezogen auf die ursprünglich vorhandene Stoffmenge konvertiert, oder mindestens 25 mol-%, oder mol-50 %, oder mol-75 %, oder 90 mol-%, jedoch weniger als 95 mol-%.

Die Ausführungsform des erfindungsgemäßen Verfahrens ist dadurch gekennzeichnet, dass im Entspannungsbehälter desorbierte Gase rückverdichtet werden und nach Verdichtung als Recycle-Gase zu dem ersten und/oder dem zweiten Synthesegasstrom zurückgeführt werden.

Die Recycle-Gase können zu einem nicht konvertiertem, einem vollständig konvertiertem oder teilweise konvertiertem Synthesegasstrom zurückgeführt werden. Die Rückführung wird so ausgewählt, dass ein definierter Kohlenmonoxid-Gehalt und/oder Wasserstoff-Gehalt im Synthesegas einstellbar ist.

Eine bevorzugte Ausführungsform des erfindungsgemäßen Verfahrens ist dadurch gekennzeichnet, dass der Kohlendioxid-Gehalt im Recycle-Gas nicht mehr als 65 mol-% beträgt, vorzugsweise nicht mehr als 50 mol-% beträgt, besonders bevorzugt nicht mehr als 35 mol-% beträgt und weiter bevorzugt nicht mehr als 20 mol-% beträgt.

Insbesondere bei teilkonvertierten Synthesegasen sind auch Kohlendioxid-Gehalte von weniger als 20 mol-% im Recycle-Gas erreichbar. Typische Bereiche für den Gehalt von Kohlendioxid im Recycle-Gas sind 5 bis 70 mol-%, bevorzugt 20 bis 50 mol-%.

Der Kohlenmonoxid-Gehalt im Recycle-Gas beträgt in einem Beispiel wenigstens 15 mol-%, vorzugsweise wenigstens 25 mol-% und besonders bevorzugt wenigstens 30 mol-%. Der Wasserstoff-Gehalt im Recycle-Gas beträgt in einem Beispiel wenigstens 25 mol-%, vorzugsweise wenigstens 40 mol-% und besonders bevorzugt wenigstens 50 mol-%.

Eine bevorzugte Ausführungsform des erfindungsgemäßen Verfahrens ist dadurch gekennzeichnet, dass die erste Zuleitung unterhalb der zweiten Zuleitung angeordnet ist.

Das erste und zweite Waschmittel treten in einem Beispiel über ein Druckminderungsventil und einen Flüssigkeitsverteiler in den Entspannungsbehälter ein. Dabei bewegen sich die Flüssigkeitstropfen des jeweiligen Waschmittels im Entspannungsbehälter von oben nach unten. Im Sumpfbereich des Entspannungsbehälter wird das teilregenerierte Waschmittel abgezogen. Die aus dem ersten und zweiten Waschmittel desorbierten Gase bewegen sich von unten nach oben und werden im Kopfbereich des Entspannungsbehälters abgezogen. Ist die erste Zuleitung, welche die erste Waschflüssigkeit mit höherem Kohlendioxid-Gehalt zuführt, unterhalb der zweiten Zuleitung angeordnet, kann das aus dem ersten Waschmittel desorbierte und nach oben strömende Kohlendioxid besonders einfach und effektiv vom sich nach unten bewegenden zweiten Waschmittel absorbiert werden.

Die Ausführungsform des erfindungsgemäßen Verfahrens ist dadurch gekennzeichnet, dass die Kohlendioxid-Konzentration im ersten beladenen Waschmittel wenigstens 5 mol-% höher ist als im zweiten beladenen Waschmittel, bevorzugt wenigstens 10 mol-% höher, besonders bevorzugt wenigstens 15 mol-% höher und weiter bevorzugt wenigstens 20 mol-% höher.

Je größer der Unterschied in der Kohlendioxid-Konzentration zwischen erstem und zweitem beladenem Waschmittel, desto größer ist der sich im Entspannungsbehälter ausbildende Kohlendioxid-Konzentrations-Gradient. Je größer diese treibende Kraft, desto größere Absolut-Mengen an Kohlendioxid können vom zweiten Waschmittel im Entspannungsbehälter absorbiert werden.

Eine bevorzugte Ausführungsform des erfindungsgemäßen Verfahrens ist dadurch gekennzeichnet, dass das teilregenerierte Waschmittel aus dem Entspannungsbehälter abgezogen und wenigstens einer weiteren Druckentspannungsstufe zugeführt wird.

Das aus dem Entspannungsbehälter abgezogene, teilregenerierte Waschmittel wird vorzugsweise wenigstens einer weiteren Entspannungsstufe zugeführt, die einen niedrigeren Druck aufweist als der Druck im Entspannungsbehälter. Es kann sich dabei in einem Beispiel um eine Niederdruck-Entspannungsstufe handeln, die bei einem Druck von 1,2 bis 15 bar betrieben wird. In der wenigstens einen weiteren Druckentspannungsstufe oder den weiteren Druckentspannungsstufen wird in einem Beispiel ein Kohlendioxid-Produktstrom von hoher Reinheit und kohlendioxidhaltiges Abgas erzeugt.

Eine bevorzugte Ausführungsform des erfindungsgemäßen Verfahrens ist dadurch gekennzeichnet, dass ein aus der wenigstens einen weiteren Druckentspannungsstufe abgezogenes Entspannungsgas über eine dritte Zuleitung zum Entspannungsbehälter geführt wird, wobei die dritte Zuleitung so angeordnet ist, dass im Entspannungsgas enthaltenes Kohlendioxid wenigstens teilweise vom zweiten beladenen Waschmittel absorbiert wird.

Insbesondere durch die erste der wenigstens einen weiteren Entspannungsstufe wird ein Entspannungsgas erzeugt, das hauptsächlich Kohlendioxid und vorher co-absorbierte Wertgase wie Kohlenmonoxid und Wasserstoff enthält. Durch Zurückführen des Entspannungsgases zum Entspannungsbehälter über die dritte Zuleitung und die entsprechende Anordnung der dritten Zuleitung am Entspannungsbehälter wird das im Entspannungsgas der wenigstens einen weiteren Entspannungsstufe enthaltene Kohlendioxid vom zweiten beladenen Waschmittel absorbiert. Dadurch wird die Kohlendioxid Menge des den Entspannungsbehälter verlassenden Recycle-Gases weiter reduziert. Weiterhin werden die im Entspannungsgas der wenigstens einen weiteren Entspannungsstufe enthaltenen, vorher co-absorbierten Wertgase, nicht vom zweiten Waschmittel absorbiert. Diese gelangen dadurch wie gewünscht in das den Entspannungsbehälter verlassende Recycle-Gas, werden in einem Recycle-Gas-Kompressor verdichtet und zu einem der Synthesegasströme zurückgeführt.

Eine bevorzugte Ausführungsform des erfindungsgemäßen Verfahrens ist dadurch gekennzeichnet, dass Dabei ist die dritte Zuleitung vorzugsweise unterhalb der zweiten Zuleitung angeordnet.

Ist die dritte Zuleitung unterhalb der zweiten Zuleitung angeordnet, so kann das Kohlendioxid des aus der wenigstens einen weiteren Druckentspannungsstufe abgezogenen Entspannungsgases besonders einfach und effektiv vom zweiten Waschmittel absorbiert werden. Die Zuleitung des zweiten Waschmittels zum Entspannungsbehälter ist gemäß dieser Ausführungsform oberhalb der dritten Zuleitung angeordnet. Das beispielsweise über einen Flüssigkeitsverteiler in den Entspannungsbehälter aufgegebene zweite beladene Waschmittel bewegt sich nach unten und nimmt das von unten nach oben strömende Kohlendioxid auf.

In einer bevorzugten Ausführungsform des erfindungsgemäßen Verfahrens ist die dritte Zuleitung unterhalb der ersten und zweiten Zuleitung angeordnet.

Je höher der Kohlendioxid-Gehalt im über die dritte Zuleitung zugeführten Gas, desto größer ist die zur Absorption des Kohlendioxids benötigte Menge an Methanol. Gemäß der vorgenannten Anordnung wird der größere Kohlendioxid Anteil durch das mit einer höheren Vorbeladung über die erste Zuleitung zugeführte Methanol absorbiert. Dabei nicht absorbiertes Kohlendioxid wird anschließend von der über die zweite Zuleitung zugeführtes Methanol absorbiert. Das über die dritte Zuleitung zugeführte Kohlendioxid wird in dieser Ausführungsform somit vom ersten und zweiten beladenen Waschmittel absorbiert. Die vorgenannte Anordnung der ersten, zweiten und dritten Zuleitung erlaubt dabei die vollständige oder zumindest im Wesentlichen vollständige Absorption des über die dritte Zuleitung zugeführten Gases bei einer gleichzeitig kleineren benötigten Methanol Menge im Vergleich zu anderen Anordnungen.

Eine bevorzugte Ausführungsform der Erfindung ist dadurch gekennzeichnet, dass das physikalisch wirkende Waschmittel ausgewählt ist aus wenigstens einem Element der Gruppe aufweisend Methanol, 1-Methyl-2-pyrrolidon (NMP), eine wässrige Lösung von 1-Methyl-2-pyrrolidon (NMP), eine Mischung von Dimethylethern von Polyethylenglycol, und Propylencarbonat (4-Methyl-1,3-dioxolan-2-on).

Weiter bevorzugt ist das physikalisch wirkende Waschmittel ausgewählt aus wenigstens einem Element der Gruppe bestehend aus Methanol, 1-Methyl-2-pyrrolidon (NMP), eine wässrige Lösung von 1-Methyl-2-pyrrolidon (NMP), eine Mischung von Dimethylethern von Polyethylenglycol, und Propylencarbonat (4-Methyl-1,3-dioxolan-2-on).

Besonders bevorzugt wird Methanol als physikalisch wirkendes Waschmittel verwendet.

Das erfindungsgemäße Verfahren wird ausgeführt in einer Vorrichtung zur Erzeugung eines Recycle-Gases aus mit wenigstens Kohlendioxid (CO₂) beladenem Waschmittel, aufweisend einen Entspannungsbehälter zur Druckentspannung eines mit wenigstens Kohlendioxid (CO₂) beladenen ersten und zweiten Waschmittels; Mittel zum Ausleiten von bei der Druckentspannung erzeugbaren Recycle-Gasen aus dem Entspannungsbehälter; Mittel zum Ausleiten des bei der Druckentspannung erzeugbaren teilregenerierten Waschmittels aus dem Entspannungsbehälter; eine ein erstes Druckminderungselement aufweisende erste Zuleitung zum Zuführen des ersten beladenen Waschmittels zum Entspannungsbehälter; eine ein zweites Druckminderungselement aufweisende zweite Zuleitung zum Zuführen des zweiten beladenen Waschmittels zum Entspannungsbehälter. Es ist vorgesehen, dass die erste Zuleitung und die zweite Zuleitung so angeordnet sind, dass im Entspannungsbehälter aufgrund einer Differenz in der Kohlendioxid-Konzentration zwischen dem ersten und dem zweiten beladenen Waschmittel aus dem ersten beladenen Waschmittel desorbierbares Kohlendioxid durch das zweite beladene Waschmittel absorbierbar ist.

Die Differenz in der Kohlendioxid-Konzentration zwischen erstem und zweitem Waschmittel führt zu einem Kohlendioxid-Konzentrations-Gradienten im Entspannungsbehälter, so dass bei entsprechender Anordnung der Zuleitung für das erste und zweite beladene Waschmittel aus dem ersten Waschmittel desorbierbares Kohlendioxid durch das zweite Waschmittel absorbierbar ist.

In einem Beispiel ist das Waschmittel zumindest mit Kohlendioxid (CO₂) sowie Schwefelwasserstoff (H₂S) beladen.

Vorzugsweise ist die erste Zuleitung unterhalb der zweiten Zuleitung angeordnet und/oder die Kohlendioxid-Konzentration im ersten beladenen Waschmittel höher ist als die Kohlendioxid-Konzentration im zweiten beladenen Waschmittel.

Eine bevorzugte Ausführungsform der Vorrichtung ist dadurch gekennzeichnet, dass die Vorrichtung eine dritte Zuleitung zur Zuführung eines Entspannungsgases einer wenigstens einen weiteren Entspannungsstufe zum Entspannungsbehälter aufweist, wobei die dritte Zuleitung so angeordnet ist, dass das im Entspannungsgas der wenigstens einen weiteren Entspannungsstufe enthaltenes Kohlendioxid wenigstens teilweise durch das zweite beladene Waschmittel absorbierbar ist.

Erwähnt wird auch eine Anlage zur Entfernung von sauren Gasbestandteilen aus Synthesegas durch Absorption der sauren Gasbestandteile in einem physikalisch wirkenden Waschmittel, beinhaltend eine erste Absorptionsvorrichtung und eine zweite Absorptionsvorrichtung, jeweils zur Entfernung von sauren Gasbestandteilen aus Synthesegas, sowie eine beschriebene Vorrichtung zur Erzeugung eines Recycle-Gases.

### Ausführungs- und Zahlenbeispiel

Die Erfindung wird im Folgenden durch ein Beispiel näher erläutert, ohne den Gegenstand der Erfindung zu beschränken. Weitere Merkmale, Vorteile und Anwendungsmöglichkeiten der Erfindung ergeben sich aus der nachfolgenden Beschreibung des Ausführungsbeispiels in Zusammenhang mit der Zeichnung und einem Zahlenbeispiel.

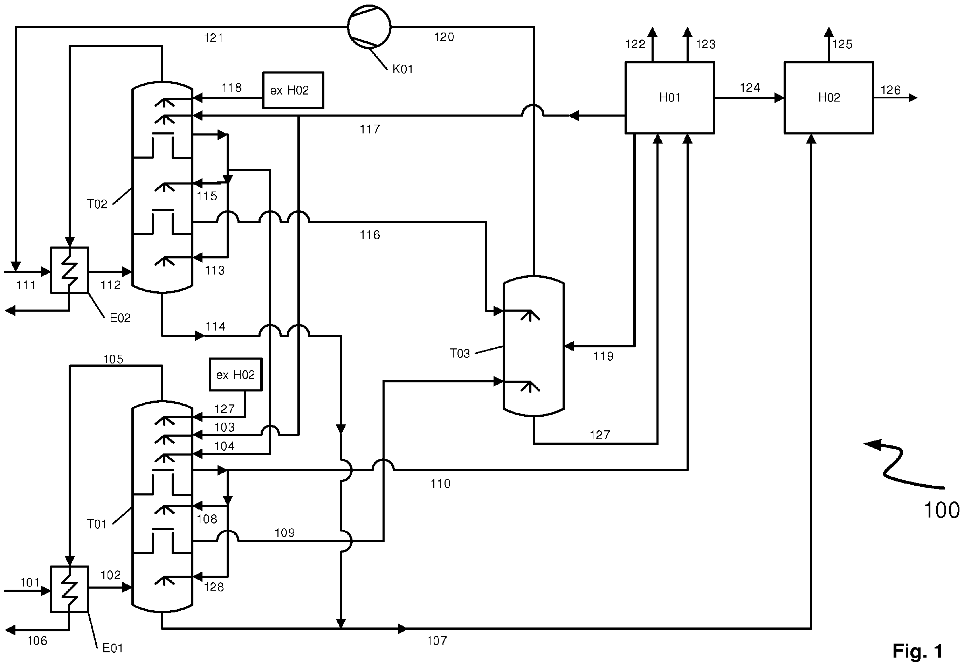

Es zeigt
- Figur 1: eine schematische Darstellung einer beispielhaften Ausgestaltung 100 des erfindungsgemäßen Verfahrens beziehungsweise der erfindungsgemäßen Vorrichtung als Teil einer erfindungsgemäßen Anlage mit Methanol als Waschmittel.

Konvertiertes, das heißt in einer Wassergas-Shift-Reaktion umgesetztes Synthesegas (Syntheserohgas) tritt über Leitung 101 in den indirekten Wärmetauscher E01 ein, wird dort gekühlt und über Leitung 102 der Absorptionsvorrichtung T01 zugeführt. In Absorptionsvorrichtung T01 wird das Synthesegas bei hohem Druck (circa 55 bar) durch das über die Leitungen 103, 104 sowie 127 und jeweils angeschlossene Flüssigkeitsverteiler eintretende Methanol gewaschen. Dabei wird ein gereinigtes Synthesegas erhalten, das Absorptionsvorrichtung T01 über die Leitungen 105 und 106 verlässt, wobei es zwischendurch im indirekten Wärmetauscher E01 erwärmt wird. Die Absorptionsvorrichtung T01 weist dedizierte, das heißt voneinander getrennte Bereiche zur Entfernung unterschiedlicher Verunreinigungen im Synthesegas auf. Die einzelnen Bereiche sind in T01 durch Kaminböden voneinander getrennt. In einem unteren Vorwäschebereich von T01 werden Cyanwasserstoff (HCN) und andere in Spuren vorhandene Verunreinigungen durch das über Leitung 128 eintretende Methanol aus dem Synthesegas entfernt. Daraus resultierendes beladenes Methanol wird im Sumpfbereich der Absorptionsvorrichtung T01 abgezogen und über Leitung 107 einer Vorrichtung H02 zugeführt. H02 dient zur Heißregenerierung von beladenem Methanol und der Entfernung von Wasser aus heißregeneriertem Methanol. Im mittleren Bereich der Absorptionsvorrichtung T01, oberhalb des unteren Kaminbodens, findet in erster Linie eine Entschwefelung durch das über Leitung 108 und angeschlossene Flüssigkeitsverteiler zugeführte Methanol statt. Bei der Entschwefelung werden Schwefelwasserstoff (H₂S) und Carbonylsulfid (COS) aus dem Synthesegas entfernt. Das über Leitung 108 zugeführte Methanol enthält Kohlendioxid (CO₂), da es bereits im oberen Bereich der Absorptionsvorrichtung - oberhalb des oberen Kaminbodens - zur Entfernung von Kohlendioxid verwendet wurde. Daraus resultierendes, mit hauptsächlich Schwefelwasserstoff und Kohlendioxid beladenes Methanol wird über Leitung 109 aus Absorptionsvorrichtung T01 abgezogen und als erstes beladenes Waschmittel über ein Druckentspannungsventil (nicht gezeigt) Entspannungsbehälter T03 zugeführt. Leitung 109 stellt damit eine erste Zuleitung im Sinne der Erfindung dar. Entspannungsbehälter T03 wird bei Mitteldruck (15 bis 40 bar) betrieben, wobei in T01 absorbierte Wertgase (Kohlenmonoxid, Wasserstoff) durch die Drucksenkung in Entspannungsbehälter T03 desorbiert werden. Im oberen Bereich der Absorptionsvorrichtung T01 wird Kohlendioxid durch Wäsche mit über die Leitungen 103, 104 und 127 sowie jeweils angeschlossene Flüssigkeitsverteiler in den oberen Bereich der Absorptionsvorrichtung T01 eintretendes Methanol entfernt. Das mit Kohlendioxid beladene Methanol gelangt anschließend über Leitung 110 in die bei niedrigerem Druck als T03 betriebene Druckentspannungsvorrichtung H01, in der Kohlendioxid durch Druckentspannung (Flashen) aus beladenem Methanol entfernt wird. H01 weist mehrere Druckentspannungsstufen auf, das heißt mehrere in Serie geschaltete Entspannungsbehälter, wobei der Druck von Behälter zu Behälter niedriger wird.

Parallel zur konvertiertes Synthesegas verarbeitenden Absorptionsvorrichtung T01 wird Absorptionsvorrichtung T02 betrieben, in der nicht konvertiertes (nicht geshiftetes) Synthesegas einer Gaswäsche unterzogen wird. Nicht konvertiertes Synthesegas (Syntheserohgas) tritt über Leitung 111 in den indirekten Wärmetauscher E02 ein, wird dort gekühlt und über Leitung 112 Absorptionsvorrichtung T02 zugeführt. Der Druck in Absorptionsvorrichtung T02 ist etwas höher (57 bar) als der Druck in der Absorptionsvorrichtung T01 (56 bar). Spurenbestandteile wie Cyanwasserstoff werden im unteren Teil der Absorptionsvorrichtung T02 durch über Leitung 113 und den angeschlossenen Flüssigkeitsverteiler eintretende Methanol entfernt. Mit Spurenbestandteilen beladenes Methanol wird über Leitung 114 abgezogen und über Leitung 107 Vorrichtung H02 zur Heißregenerierung des Methanols zugeführt. Synthesegas in der Absorptionsvorrichtung T02 steigt anschließend weiter durch den unteren Kaminboden nach oben in den mittleren Teil von Absorptionsvorrichtung T02 um dort einer Entschwefelung unterzogen zu werden. Bei der Entschwefelung wird Schwefelwasserstoff und Carbonylsulfid aus Synthesegas entfernt. Dafür wird dem mittleren Bereich von T02 Methanol über Leitung 115 zugeführt, das bereits im oberen Bereich von T02 mit Kohlendioxid beladen wurde. Das mit Schwefelkomponenten und Kohlendioxid beladene Methanol wird anschließend über Leitung 116 und ein Druckentspannungsventil (nicht gezeigt) dem oberen Bereich des Entspannungsbehälters T03 zugeführt. Die Leitung 116 stellt damit eine zweite Zuleitung im Sinne der Erfindung dar. Entspannungsbehälter T03 wird bei Mitteldruck (15 bis 40 bar) betrieben, wobei unbeabsichtigt in der Absorptionsvorrichtung T02 absorbierte Wertgase (Kohlenmonoxid, Wasserstoff) durch Drucksenkung im Entspannungsbehälter T03 desorbiert werden. Über Leitung 116 zugeführtes beladene Methanol weist eine niedrigere Kohlendioxid-Konzentration auf als über Leitung 109 zugeführtes beladenes Methanol.

Synthesegas aus dem mittleren Bereich von Absorptionsvorrichtung T02 steigt weiter nach oben durch den oberen Kaminboden in den oberen Bereich von Absorptionsvorrichtung T02. Dort wird, wie bereits oben beschrieben, im Wesentlichen Kohlendioxid entfernt. Dies geschieht erstens durch das über Leitung 117 zugeführte Methanol, welches nach Druckentspannung in Druckentspannungsvorrichtung H01 mit wenig Kohlendioxid beladen ist. Zweitens geschieht dies durch das in Vorrichtung H02 durch Heißregenerierung gewonnenes Methanol, welches frei von Kohlendioxid-Rückständen ist. Heiß regeneriertes Methanol wird Absorptionsvorrichtung T02 über Leitung 118 zugeführt.

Mit Schwefelwasserstoff und Kohlendioxid beladenes Methanol aus Absorptionsvorrichtung T02 ist niedriger mit Kohlendioxid beladen, das heißt weist eine niedrigere Kohlendioxd-Konzentration auf, als mit Schwefelwasserstoff und Kohlendioxid beladenes Methanol aus Absorptionsvorrichtung T01. Dies liegt darin begründet, das in Absorptionsvorrichtung T01 konvertiertes Synthesegas gewaschen wird, welches von vorneherein einen signifikant höheren Kohlendioxid-Gehalt aufweist als nicht konvertiertes Synthesegas. Der höhere Kohlendioxidgehalt wirkt sich dementsprechend auf die Kohlendioxid-Konzentration im jeweiligen beladenen Waschmittel (Methanol) aus.

Mit Schwefelwasserstoff und Kohlendioxid beladenes Methanol aus Absorptionsvorrichtung T02 (nicht konvertiertes Synthesegas) gelangt über Leitung 116 in den oberen Teil von Entspannungsbehälter T03. Mit Schwefelwasserstoff und Kohlendioxid beladenes Methanol aus Absorptionsvorrichtung T01 gelangt über Leitung 109 in den unteren Teil von Entspannungsbehälter T03. Der Stutzen für Leitung 116 (die zweite Zuleitung) ist dabei oberhalb des Stutzens für Leitung 109 (die erste Zuleitung) angeordnet (Stutzen nicht gezeigt). In Entspannungsbehälter T03 findet eine wenigstens teilweise Durchmischung der beladenen Waschmittel-Ströme statt und durch die Druckentspannung auf Mitteldruck werden Wertgase (Kohlenmonoxid, Wasserstoff) sowie ein Teil des absorbierten Kohlendioxids als Entspannungsgase desorbiert. Da der Waschmittel-Strom aus Absorptionsvorrichtung T02 eine niedrigere Kohlendioxid-Konzentration aufweist als der Waschmittel-Strom aus Absorptionsvorrichtung T01, wird der Waschmittelstrom aus Absorptionsvorrichtung T02 oberhalb des Waschmittelstroms aus Absorptionsvorrichtung T01 zugeführt, so dass aus dem über Leitung 109 zugeführten beladenen Methanol desorbiertes Kohlendioxid von dem über Leitung 116 zugeführten beladenen Methanol absorbiert werden kann. Im unteren Teil des Entspannungsbehälters T03 desorbiertes Kohlendioxid wird dadurch von im oberen Bereich des Entspannungsbehälters zugeführten Methanol zurückgewaschen.

Zur gleichen Zeit wird mit Kohlendioxid beladenes Methanol über Leitung 110 Druckentspannungsvorrichtung H01 zugeführt. Die in einer ersten Entspannungsstufe von H01 erhaltenen und auch co-absorbierte Wertgase enthaltenden desorbierten Gase werden über Leitung 119 dem mittleren Teil des Entspannungsbehälters T03 zugeführt. Kohlendioxid wird dort durch das über Leitung 116 zugeführte Methanol zusätzlich absorbiert, also zurückgewaschen. Die insgesamt in T03 desorbierten Wertgase gelangen zusammen mit nicht zurückgewaschenem Kohlendioxid über Leitung 120 in den Recycle-Gas-Kompressor K01 und werden dort auf den in Absorptionsvorrichtung T02 herrschenden Druck verdichtet. Nach Verdichtung in K01 gelangen die Recycle-Gase über Leitung 121 zum Synthesegas-Strom in Leitung 111, werden im indirekten Wärmetauscher E02 gekühlt und über Leitung 112 der Absorptionsvorrichtung T02 zugeführt.

Gemäß einer Alternative zum beschriebenen Beispiel können die Recycle-Gase auch zur Absorptionsvorrichtung T01 zurückgeführt werden, je nachdem welche Gaszusammensetzung im Ergebnis gewünscht ist.

In weiteren Entspannungsstufen der Druckentspannungsvorrichtung H01 werden ein Kohlendioxid-Produktstrom von hoher Reinheit und ein kohlendioxidhaltiges Abgas erzeugt, die über die Leitungen 122 und 123 abgezogen werden.

Das im Sumpfbereich von T03 abgezogene, mit Schwefelwasserstoff und Kohlendioxid beladene Methanol wird über Leitung 127 Druckentspannungsvorrichtung H01 zugeführt. In T03 bei niedrigem Druck erhaltenes, hauptsächlich mit Schwefelbestandteilen beladenes Methanol wird zur Entschwefelung über Leitung 124 Vorrichtung H02 zur Heißregenerierung zugeführt. In Vorrichtung H02 wird einerseits ein hauptsächlich Schwefelwasserstoff enthaltenes Gas erzeugt sowie Wasser aus Methanol entfernt. Schwefelwasserstoff wird über Leitung 125 und Wasser über Leitung 126 aus Vorrichtung H02 abgezogen. Das auch als Sauergas bezeichnete, hauptsächlich Schwefelwasserstoff aufweisende Gas kann nach Auskondensieren des darin enthaltenen Methanols einer Claus-Anlage zur Schwefelsynthese zugeführt werden (nicht gezeigt).

Im folgenden Vergleichsbeispiel werden die Vorteile der Erfindung weiter verdeutlicht. Die nachstehende Tabelle zeigt Recycle-Gas Zusammensetzungen aus einem Gaswäscheverfahren mit Methanol, in dem ein im Wesentlichen vollständig konvertiertes Synthesegas (geshiftetes Gas) und ein nicht konvertiertes (nicht geshiftetes) Synthesegas in dedizierten Absorptionsvorrichtungen gemäß vorstehendem Beispiel einer Gaswäsche unterzogen wurden. Das Beispiel gemäß der Erfindung stellt die erhaltene Recycle-Gas Zusammensetzung einem Vergleichsbeispiel gegenüber, in dem die Waschmittelströme aus den Absorptionsvorrichtungen zunächst vollständig gemischt und anschließend einer üblichen Druckentspannung (Flashen) unterzogen wurden.

| | **Beispiel (Erfindung)** | **Vergleichsbeispiel** | **Differenz** |
|---|---|---|---|
| CO₂ Gehalt im Recycle-Gas | 31,0 mol-% | 57,5 mol-% | -26,5 mol-% |
| CO Gehalt im Recycle-Gas | 27,2 mol-% | 15,8 mol-% | +11,4 mol-% |
| H₂ Gehalt im Recycle-Gas | 40,7 mol-% | 26,1 mol-% | + 14,6 mol-% |
| H₂ + CO Rückgewinnung für gesamte Anlage | 99,701 % | 99,673 % | + 0,03 % |
| Leistungsaufnahme Recycle-Gas Kompressor | 309 kW | 424 kW | -115 kW (-27%) |
| Leistungsaufnahme Kühlung | 8400 kW | 8578 kW | -178 kW (-2 %) |

Das erfindungsgemäße Beispiel weist ein Recycle-Gas mit einem Gehalt von 31,0 mol-% Kohlendioxid aus, was einer absoluten Verbesserung um 26,5 mol-% gegenüber dem Wert gemäß Vergleichsbeispiel (57,5 mol-%) entspricht. Relativ gesehen wird der Kohlendioxid-Gehalt im Recycle-Gas durch das erfindungsgemäße Verfahren um circa 46 % verringert und stellt damit eine signifikante Verbesserung dar. Dadurch wird die Leistungsaufnahme des Recycle-Gas Kompressors in vorteilhafter Weise um 115 kW oder relativ gesehen 27 % verringert. Gleichzeitig verringert sich die Leistungsaufnahme der Kühleinheit in vorteilhafter Weise um 115 kW oder relativ gesehen um 2 %, da die Absorptionsvorrichtungen weniger zurückgeführte Gase aufzunehmen haben und entsprechend weniger Absorptionswärme anfällt. Gleichzeitig steigt durch den niedrigeren Kohlendioxid-Gehalt im Recycle-Gas der Gehalt an den Wertgasen Kohlenmonoxid in vorteilhafter Weise um 11,4 mol-% und Wasserstoff um 14,6 mol-%.

Die folgende Tabelle zeigt die einzelnen Konzentrationen der Komponenten im für das Beispiel und Vergleichsbeispiel erhaltenen beladenen Methanol. Die linke Spalte zeigt Werte für beladenes Methanol aus der Gaswäsche des nicht konvertierten Synthesegases, während die rechte Spalte Werte für beladenes Methanol aus der Gaswäsche des im Wesentlichen vollständig konvertierten Synthesegases zeigt. Der Druck bei der Gaswäsche in der Absorptionsvorrichtung betrug im Falle des nicht konvertierten Synthesegases 56,7 bar, während der Druck im Falle des konvertierten Synthesegases 55,3 bar betrug.

| | **Beladenes Methanol aus Absorptionsvorrichtung für nicht konvertiertes Synthesegas** | **Beladenes Methanol aus Absorptionsvorrichtung für konvertiertes Synthesegas** |
|---|---|---|
| CO₂ Konzentration | 21,86 mol-% | 40,22 mol-% |
| CO Konzentration | 1,27 mol-% | 0,05 mol-% |
| H2 Konzentration | 0,21 mol-% | 0,53 mol-% |
| H₂S Konzentration | 0,49 mol-% | 0,27 mol-% |
| COS Konzentration | 0,00 mol-% | 0,00 mol-% |

Das beladene Methanol entsprechend der Zusammensetzung der linken Spalte stellt ein Beispiel für ein zweites beladenes Waschmittel im Sinne der Erfindung dar. Das beladene Methanol entsprechend der Zusammensetzung der rechten Spalte stellt ein Beispiel für ein erstes beladenes Waschmittel im Sinne der Erfindung dar. Das beladene Methanol entsprechend der rechten Spalte wurde aus einer zweiten Absorptionsvorrichtung im Sinne der Erfindung erhalten und weist eine deutlich höhere Kohlendioxid-Konzentration auf als das beladene Methanol entsprechen der linken Spalte, welches aus einer ersten Absorptionsvorrichtung im Sinne der Erfindung erhalten wurde.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden kann. Alle Merkmale können kombiniert werden um synergetische Effekte zu erzielen, welche über die einfache Summierung der technischen Merkmale hinausgehen.

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 100: Erfindungsgemäßes Verfahren oder Anlage
- 101 bis 127: Leitung
- E01: Indirekter Wärmetauscher
- E02: Indirekter Wärmetauscher
- H01: Druckentspannungsvorrichtung
- H02: Vorrichtung zur Heißregenerierung
- K01: Recycle-Gas-Kompressor
- T01: Absorptionsvorrichtung
- T02: Absorptionsvorrichtung
- T03: Entspannungsbehälter

## Patentansprüche

1. Verfahren zur Entfernung von sauren Gasbestandteilen aus einem zumindest Wasserstoff (H₂), Kohlenmonoxid (CO), Kohlendioxid (CO₂) und Schwefelwasserstoff (H₂S) aufweisenden Synthesegas durch Absorption der sauren Gasbestandteile in einem physikalisch wirkendem Waschmittel, bei dem einem Entspannungsbehälter aus einer ersten Absorptionsvorrichtung ein erstes mit zumindest Kohlendioxid (CO₂) beladenes Waschmittel über eine erste Zuleitung zur Druckentspannung zugeführt wird, und
dem Entspannungsbehälter aus einer zweiten Absorptionsvorrichtung ein zweites mit zumindest Kohlendioxid (CO₂) beladenes Waschmittel über eine zweite Zuleitung zur Druckentspannung zugeführt wird, wobei der ersten Absorptionsvorrichtung ein erster Synthesegasstrom zugeführt wird, und der zweiten Absorptionsvorrichtung ein zweiter Synthesegasstrom zugeführt wird, wobei der Kohlendioxid-Gehalt im ersten Synthesegasstrom höher ist als der Kohlendioxid-Gehalt im zweiten Synthesegasstrom und die Kohlendioxid-Konzentration im ersten beladenen Waschmittel wenigstens 5 mol-% höher ist als die Kohlendioxid-Konzentration im zweiten beladenen Waschmittel,
**dadurch gekennzeichnet, dass**
im Entspannungsbehälter eine wenigstens teilweise Durchmischung des ersten und des zweiten beladenen Waschmittels erfolgt, wobei durch die Durchmischung und Druckentspannung ein teilregeneriertes Waschmittel erhalten wird, und
die erste Zuleitung und die zweite Zuleitung so angeordnet sind, dass durch die Druckentspannung aus dem ersten beladenen Waschmittel desorbiertes Kohlendioxid wenigstens teilweise vom zweiten beladenen Waschmittel absorbiert wird und
im Entspannungsbehälter desorbierte Gase rückverdichtet werden und nach Verdichtung als Wasserstoff (H₂), Kohlenmonoxid (CO) und Kohlendioxid (CO₂) aufweisendes Recycle-Gas zu dem ersten und/oder dem zweiten Synthesegasstrom zurückgeführt werden.

2. Verfahren nach Anspruch 1, **dadurch gekennzeichnet, dass** der erste Synthesegasstrom einer Wassergas-Shift-Reaktion unterzogen wurde und der zweite Synthesegasstrom keiner Wassergas-Shift-Reaktion unterzogen wurde.

3. Verfahren nach Anspruch 1, **dadurch gekennzeichnet, dass** der erste Synthesegasstrom teilweise einer Wassergas-Shift-Reaktion unterzogen wurde, wobei mindestens 5 mol-% Kohlenmonoxid bezogen auf die ursprünglich vorhandene Stoffmenge zu Kohlendioxid konvertiert wurden, und der zweite Synthesegasstrom keiner Wassergas-Shift Reaktion unterzogen wurde.

4. Verfahren nach Anspruch 1, **dadurch gekennzeichnet, dass** der erste Synthesegasstrom einer Wassergas-Shift-Reaktion unterzogen wurde und der zweite Synthesegasstrom teilweise einer Wassergas-Shift-Reaktion unterzogen wurde, wobei mindestens 5 mol-% Kohlenmonoxid bezogen auf die ursprünglich vorhandene Stoffmenge zu Kohlendioxid konvertiert wurden.

5. Verfahren nach einem der vorherigen Ansprüche, **dadurch gekennzeichnet, dass** der Kohlendioxid-Gehalt im Recycle-Gas nicht mehr als 65 mol-% beträgt, vorzugsweise nicht mehr als 50 mol-% beträgt, besonders bevorzugt nicht mehr als 35 mol-% beträgt und weiter bevorzugt nicht mehr als 20 mol-% beträgt.

6. Verfahren nach einem der vorherigen Ansprüche, **dadurch gekennzeichnet, dass** die erste Zuleitung unterhalb der zweiten Zuleitung angeordnet ist.

7. Verfahren nach einem der vorherigen Ansprüche, **dadurch gekennzeichnet, dass** die Kohlendioxid-Konzentration im ersten beladenen Waschmittel wenigstens 10 mol-% höher ist als im zweiten beladenen Waschmittel, bevorzugt wenigstens 15 mol-% höher, besonders bevorzugt wenigstens 20 mol-% höher.

8. Verfahren nach einem der vorherigen Ansprüche, **dadurch gekennzeichnet, dass** das teilregenerierte Waschmittel aus dem Entspannungsbehälter abgezogen und wenigstens einer weiteren Druckentspannungsstufe zugeführt wird.

9. Verfahren nach Anspruch 8, **dadurch gekennzeichnet, dass** ein aus der wenigstens einen weiteren Druckentspannungsstufe abgezogenes Entspannungsgas über eine dritte Zuleitung zum Entspannungsbehälter geführt wird, wobei die dritte Zuleitung so angeordnet ist, dass im Entspannungsgas enthaltenes Kohlendioxid wenigstens teilweise vom zweiten beladenen Waschmittel absorbiert wird.

10. Verfahren nach Anspruch 9, **dadurch gekennzeichnet, dass** die dritte Zuleitung unterhalb der zweiten Zuleitung angeordnet ist.

11. Verfahren nach Anspruch 9, **dadurch gekennzeichnet, dass** die dritte Zuleitung unterhalb der ersten und zweiten Zuleitung angeordnet ist.

12. Verfahren nach einem der vorherigen Ansprüche, **dadurch gekennzeichnet, dass** das physikalisch wirkende Waschmittel ausgewählt ist aus wenigstens einem Element der Gruppe aufweisend Methanol, 1-Methyl-2-pyrrolidon (NMP), eine wässrige Lösung von 1-Methyl-2-pyrrolidon (NMP), eine Mischung von Dimethylethern von Polyethylenglycol, und Propylencarbonat (4-Methyl-1,3-dioxolan-2-on).

13. Verfahren nach Anspruch 12, **dadurch gekennzeichnet, dass** das physikalisch wirkende Waschmittel Methanol ist.

## Claims

1. Process for removal of acidic gas constituents from a synthesis gas comprising at least hydrogen (H₂), carbon monoxide (CO), carbon dioxide (CO₂) and hydrogen sulfide (H₂S) by absorption of the acidic gas constituents in a physical scrubbing medium in which
a first scrubbing medium laden with at least carbon dioxide (CO₂) is supplied to a decompression vessel for depressurization from a first absorption apparatus via a first feed conduit and
a second scrubbing medium laden with at least carbon dioxide (CO₂) is supplied to the decompression vessel for depressurization from a second absorption apparatus via a second feed conduit, wherein
a first synthesis gas stream is supplied to the first absorption apparatus and a second synthesis gas stream is supplied to the second absorption apparatus, wherein the carbon dioxide content in the first synthesis gas stream is higher than the carbon dioxide content in the second synthesis gas stream and the carbon dioxide concentration in the first laden scrubbing medium is at least 5 mol% higher than the carbon dioxide concentration in the second laden scrubbing medium,
**characterized in that**
an at least partial commixing of the first and the second laden scrubbing medium is effected in the decompression vessel, wherein the commixing and depressurization affords a partially regenerated scrubbing medium and the first feed conduit and the second feed conduit are arranged such that carbon dioxide desorbed from the first laden scrubbing medium by the depressurization is at least partially absorbed by the second laden scrubbing medium and
gases desorbed in the decompression vessel are recompressed and after compression are recycled to the first and/or the second synthesis gas stream as recycle gas comprising hydrogen (H₂), carbon monoxide (CO) and carbon dioxide (CO₂).

2. Process according to Claim 1, **characterized in that** the first synthesis gas stream has been subjected to a water-gas shift reaction and the second synthesis gas stream has not been subjected to a water-gas shift reaction.

3. Process according to Claim 1, **characterized in that** the first synthesis gas stream has been partially subjected to a water-gas shift reaction, wherein at least 5 mol% of carbon monoxide based on the originally present amount of substance have been converted to carbon dioxide, and the second synthesis gas stream has not been subjected to a water-gas shift reaction.

4. Process according to Claim 1, **characterized in that** the first synthesis gas stream has been subjected to a water-gas shift reaction and the second synthesis gas stream has been partially subjected to a water-gas shift reaction, wherein at least 5 mol% of carbon monoxide based on the originally present amount of substance have been converted to carbon dioxide.

5. Process according to any of the preceding claims, **characterized in that** the carbon dioxide content in the recycle gas is not more than 65 mol%, preferably not more than 50 mol%, particularly preferably not more than 35 mol% and more preferably not more than 20 mol%.

6. Process according to any of the preceding claims, **characterized in that** the first feed conduit is arranged below the second feed conduit.

7. Process according to any of the preceding claims, **characterized in that** the carbon dioxide concentration in the first laden scrubbing medium is at least 10 mol% higher than in the second laden scrubbing medium, preferably at least 15 mol% higher, particularly preferably at least 20 mol% higher.

8. Process according to any of the preceding claims, **characterized in that** the partially regenerated scrubbing medium is withdrawn from the decompression vessel and sent to at least one further depressurization stage.

9. Process according to Claim 8, **characterized in that** a decompression gas withdrawn from the at least one further decompression stage is passed to the decompression vessel via a third feed conduit, wherein the third feed conduit is arranged such that carbon dioxide present in the decompression gas is at least partially absorbed by the second laden scrubbing medium.

10. Process according to Claim 9, **characterized in that** the third feed conduit is arranged below the second feed conduit.

11. Process according to Claim 9, **characterized in that** the third feed conduit is arranged below the first and second feed conduit.

12. Process according to any of the preceding claims, **characterized in that** the physical scrubbing medium is selected from at least one element of the group comprising methanol, 1-methyl-2-pyrrolidone (NMP), an aqueous solution of 1-methyl-2-pyrrolidone (NMP), a mixture of dimethyl ethers of polyethylene glycol, and propylene carbonate (4-methyl-1,3-dioxolane-2-one).

13. Process according to Claim 12, **characterized in that** the physical scrubbing medium is methanol.

## Revendications

1. Procédé pour l'élimination de constituants gazeux acides à partir d'un gaz de synthèse présentant au moins de l'hydrogène (H₂), du monoxyde de carbone (CO), du dioxyde de carbone (CO₂) et de l'acide sulfhydrique (H₂S) par absorption des constituants gazeux acides dans un agent de lavage à effet physique, dans lequel un récipient de détente est alimenté en un premier agent de lavage au moins chargé en dioxyde de carbone (CO₂) provenant d'un premier dispositif d'absorption via une première conduite d'alimentation pour la détente de la pression et
le récipient de détente est alimenté en un deuxième agent de lavage au moins chargé en dioxyde de carbone (CO₂) provenant d'un deuxième dispositif d'absorption via une deuxième conduite d'alimentation pour la détente de la pression,
le premier dispositif d'absorption étant alimenté en un premier flux de gaz de synthèse et le deuxième dispositif d'absorption étant alimenté en un deuxième flux de gaz de synthèse, la teneur en dioxyde de carbone dans le premier flux de gaz de synthèse étant supérieure à la teneur en dioxyde de carbone dans le deuxième flux de gaz de synthèse et la concentration en dioxyde de carbone dans le premier agent de lavage chargé étant supérieure d'au moins 5% en mole à la concentration en dioxyde de carbone dans le deuxième agent de lavage chargé, **caractérisé en ce que**, dans le récipient de détente, un mélange au moins partiel du premier et du deuxième agent de lavage chargé a lieu, un agent de lavage partiellement régénéré étant obtenu par le mélange et la détente de la pression et
la première conduite d'alimentation et la deuxième conduite d'alimentation sont disposées de manière telle que du dioxyde de carbone désorbé du premier agent de lavage chargé par la détente de la pression est au moins partiellement absorbé par le deuxième agent de lavage chargé et
des gaz désorbés dans le récipient de détente sont comprimés en retour et recyclés après la compression sous forme de gaz de recyclage présentant de l'hydrogène (H₂), du monoxyde de carbone (CO) et du dioxyde de carbone (CO₂) dans le premier et/ou le deuxième flux de gaz de synthèse.

2. Procédé selon la revendication 1, **caractérisé en ce que** le premier flux de gaz de synthèse a été soumis à une réaction de déplacement de gaz à l'eau et le deuxième flux de gaz de synthèse n'est pas soumis à une réaction de déplacement de gaz à l'eau.

3. Procédé selon la revendication 1, **caractérisé en ce que** le premier flux de gaz de synthèse a été soumis partiellement à une réaction de déplacement de gaz à l'eau, au moins 5% en mole de monoxyde de carbone, par rapport à la quantité initialement présente, ayant été convertis en dioxyde de carbone, et le deuxième flux de gaz de synthèse n'a pas été soumis à une réaction de déplacement de gaz à l'eau.

4. Procédé selon la revendication 1, **caractérisé en ce que** le premier flux de gaz de synthèse a été soumis à une réaction de déplacement de gaz à l'eau et le deuxième flux de gaz de synthèse a été soumis partiellement à une réaction de déplacement de gaz à l'eau, au moins 5% en mole de monoxyde de carbone, par rapport à la quantité initialement présente, ayant été convertis en dioxyde de carbone.

5. Procédé selon l'une quelconque des revendications précédentes, **caractérisé en ce que** la teneur en dioxyde de carbone dans le gaz de recyclage n'est pas supérieure à 65% en mole, de préférence pas supérieure à 50% en mole, de manière particulièrement préférée pas supérieure à 35% en mole et plus préférablement pas supérieure à 20% en mole.

6. Procédé selon l'une quelconque des revendications précédentes, **caractérisé en ce que** la première conduite d'alimentation est disposée sous la deuxième conduite d'alimentation.

7. Procédé selon l'une quelconque des revendications précédentes, **caractérisé en ce que** la concentration en dioxyde de carbone dans le premier agent de lavage chargé est supérieure d'au moins 10% en mole à celle dans le deuxième agent de lavage chargé, de préférence supérieure d'au moins 15% en mole, de manière particulièrement préférée supérieure d'au moins 20% en mole.

8. Procédé selon l'une quelconque des revendications précédentes, **caractérisé en ce que** l'agent de lavage partiellement régénéré est soutiré du récipient de détente et introduit dans au moins une autre étape de détente de la pression.

9. Procédé selon la revendication 8, **caractérisé en ce qu'**un gaz de détente soutiré dudit au moins un autre étage de détente de la pression est guidé via une troisième conduite d'alimentation vers le récipient de détente, la troisième conduite d'alimentation étant disposée de manière telle que du dioxyde de carbone contenu dans le gaz de détente est absorbé au moins partiellement par le deuxième agent de lavage chargé.

10. Procédé selon la revendication 9, **caractérisé en ce que** la troisième conduite d'alimentation est disposée sous la deuxième conduite d'alimentation.

11. Procédé selon la revendication 9, **caractérisé en ce que** la troisième conduite d'alimentation est disposée sous la première et la deuxième conduite d'alimentation.

12. Procédé selon l'une quelconque des revendications précédentes, **caractérisé en ce que** l'agent de lavage à effet physique est choisi parmi au moins un élément du groupe présentant le méthanol, la 1-méthyl-2-pyrrolidone (NMP), une solution aqueuse de 1-méthyl-2-pyrrolidone (NMP), un mélange de diméthyléthers de polyéthylèneglycol et le carbonate de propylène (4-méthyl-1,3-dioxolan-2-one).

13. Procédé selon la revendication 12, **caractérisé en ce que** l'agent de lavage à effet physique est du méthanol.
